# EUROPEAN PATENT APPLICATION

(11) **EP 4 696 506 A1**
(43) Date of publication of application: **18.02.2026**
(21) Application number: 23933115.0
(22) Date of filing: 14.12.2023
(51) Int. Cl.: B32B 27/00, B32B 7/06, B41M 3/00, C09D 11/101

(54) **LAMINATE, METHOD FOR PRODUCING LAMINATE, AND METHOD FOR DEINKING LAMINATE**

(30) Priority: 14.04.2023 JP 2023066274
(71) Applicant: artience Co., Ltd., Chuo-ku Tokyo 104-0031 (JP); TOYO INK CO., LTD., Chuo-ku, Tokyo 104-8378 (JP)
(72) Inventor: KUGE, Hiroyuki, Tokyo 104-8378 (JP); YAMAZAKI, Tetsuya, Tokyo 104-8378 (JP); MAJIMA, Yuki, Tokyo 104-8378 (JP); KADOWAKI, Ryou, Tokyo 104-8378 (JP)
(74) Representative: Becker, Eberhard
(86) International application number: PCT/JP2023/044874
(87) International publication number: WO 2024/214341

(57) **Abstract**

Provided is a laminate having an anchor layer and an ink layer in the stated order on a non-absorbent substrate, wherein the anchor layer includes an aqueous resin, the acid value of the aqueous resin is 25-300 mgKOH/g and the glass transition temperature thereof is 10-150°C, and the ink layer is a cured product of at least one ink selected from active energy ray-curable offset printing ink, active energy ray-curable flexographic printing ink, and active energy ray-curable resin letterpress printing ink.

## Description

### Technical Field

Embodiments of the present invention relate to a laminate, a producing method for a laminate, and a deinking method for a laminate.

### Related Art

Active energy ray curing type inks and varnishes have the convenience of curing instantaneously compared to oxidative polymerization type, penetration drying type, and hot air drying type oil-based inks and varnishes. They also have the characteristics of being able to form strong cured films and being non-VOC without containing petroleum-based volatile compounds. For these reasons, active energy ray curing type inks and varnishes are widely used in the field of package printing industry, ranging from beverage and food packaging applications, pharmaceutical packaging applications, cosmetic packaging applications, to general paper container applications.

Particularly in the food packaging field, as an ideal form of active energy ray curing type inks and varnishes, electron beam (hereinafter also referred to as "EB") curing type inks that do not contain photopolymerization initiators and consider safety and security for the human body and environment can be raised. However, EB curing type inks can hardly be said to be general due to the large initial capital investment, and ultraviolet (hereinafter also referred to as "UV") curing type inks are general in the market.

In recent years, it is known that there is a gradual transition to new systems such as LED curing type systems using UV-LED light sources that are power-saving and suppress the generation of ozone and heat, energy-saving UV systems using one metal halide lamp that excludes the infrared region that generates heat and the ultraviolet region that generates ozone, and energy-saving UV systems that reduce the number of conventional UV lamps from the usual 3 to 4 lamps to 1 lamp.

Energy-saving UV curable inks and varnishes designed to correspond to these new systems have a tendency of increasing conversion from general oil-based inks and varnishes in recent years, particularly in commercial printing. Thus, energy-saving UV curable inks and varnishes are required to have performance equivalent to general oil-based inks and varnishes, such as printability and print quality. Among these, energy-saving UV curable inks that have received certification of recycling suitability A rank as "recycling-compatible UV curable inks" are increasing.
However, not all UV systems in the market are replaced with energy-saving UV systems, and conventional UV systems with proven track records (many of which have recycling suitability B rank) are still often used. UV curable inks and varnishes are generally considered more difficult to recycle than general oil-based inks and varnishes, except for recycling-compatible energy-saving UV curable inks and some recycling-compatible UV curable inks. In order to simplify recycling in the case of recovering printed materials, it is considered extremely difficult and nearly impossible to separate printed materials of active energy ray curing type inks and varnishes such as UV curable types that are not recycling-compatible.

Further, even in the case of non-absorbent substrates other than paper, development of methods that facilitate recycling of substrates, similar to paper substrates, is considered urgent. This is because, in recent years, development of UV curing devices, UV-LED curing devices, and EB curing devices that are less likely to apply heat has also been performed, so that even in the case of substrates having small thickness, active energy ray irradiation can be performed within a range that does not cause thermal damage to the substrate, and as a result, examples in which active energy ray curing type inks and varnishes are used are increasing.

Particularly for plastic substrates, countermeasures against marine pollution are required among global environmental measures, and development of plastic recovery systems that do not allow microplastics, which cause marine pollution, to flow into the ocean is considered urgent. Compared to chemical recycling that chemically decomposes materials such as plastics for reuse, material recycling that pelletizes materials for reuse is superior in simplicity. However, in the case of material recycling, when active energy ray curing type inks and varnishes are not desorbed from the substrate, residual inks and varnishes enter the melting process of the substrate. As a result, the substrate is difficult to return to its original color, and there is a high possibility that the applications of the recycled substrate will be limited. Thus, developing a simple method for desorbing additives such as active energy ray curing type inks and varnishes and adhesives from packaging materials such as plastics leads to improving the efficiency of material recycling.

Further, not limited to flexible packaging materials, a method that can simply desorb active energy ray curing type inks and varnishes from all non-absorbent substrates, ranging from rigid plastic substrates such as cap materials for PET bottles to nonwoven fabrics and metals, is desired. In the case of being able to simply reuse the materials serving as substrates by the above method, it becomes possible to reduce the use of fossil resources through improved recycling efficiency, and consequently contribute to reducing the amount of carbon dioxide.

For example, Patent Document 1 discloses an organic solvent-based ink for a release layer that can be removed by alkali treatment, a laminate such as a printed matter including a release layer using this ink, and a recycling method for this laminate. However, the inks subject to desorption are limited to inks that use solvents, and there is no simple deinking method for active energy ray curing type inks that are generally considered solvent-free. Thus, establishment of printed matter having excellent deinking suitability using general active energy ray curing type inks and varnishes, and a producing method for the printed matter is desired.

Patent Document 2 mentions an aqueous anchor agent for a release layer that can be removed by alkali treatment, and a laminate such as a printed matter including a release layer using this agent. However, the substrates subject to desorption are limited to paper or synthetic paper, and technology has not been established for non-absorbent substrates such as plastics. In particular, in the case of non-absorbent substrates such as plastics compared to paper substrates, adhesion between the substrate and the anchor layer, and blocking resistance of the anchor layer are major issues. Here, blocking resistance includes resistance to blocking in portions where ink is not printed on the anchor layer, and blocking resistance in response to overlapping by winding or stacking before ink printing. Among active energy ray curing type inks, active energy ray curing type offset printing ink, active energy ray curing type flexographic printing ink, and active energy ray curing type resin letterpress printing ink have high film strength and are inks with high difficulty in deinking, so an anchor agent that can perform deinking even in the case of using these inks is required.

### Citation List

### Patent Documents

Patent Document 1: Japanese Patent Application Laid-Open (JP-A) No. 2020-090627.
Patent Document 2: Patent No. 7070772

### SUMMARY OF INVENTION

### Technical Problem

One embodiment of the present invention provides a laminate that has excellent physical properties as a laminate such as blocking resistance and scratch resistance, while having excellent deinking properties for removing active energy ray curing type ink in recycling treatment of non-absorbent substrates. Another embodiment of the present invention provides a producing method for the laminate of the above embodiment. Still another embodiment of the present invention provides a deinking method for the laminate.

### Solution to Problem

The present inventors conducted extensive studies to solve the above problems, and as a result, found that the above problems may be solved by the laminate shown below and the producing method for the laminate, leading to completion of the present invention. That is, embodiments of the present invention are exemplified below. However, the present invention is not limited to the following description and includes various embodiments.

One embodiment of the present invention related to a laminate having an anchor layer and an ink layer in this order on a non-absorbent substrate,
in which the anchor layer contains an aqueous resin,
an acid value of the aqueous resin is 25 to 300 mgKOH/g,
a glass transition temperature of the aqueous resin is 10 to 150°C, and
the ink layer is a cured product of at least one ink selected from active energy ray curing type offset printing ink, active energy ray curing type flexographic printing ink, and active energy ray curing type resin letterpress printing ink.

In the laminate of the above embodiment, the aqueous resin preferably includes one or more selected from a group consisting of aqueous acrylic resin and aqueous urethane resin.

Another embodiment of the present invention is a producing method for a laminate, including
a step 1 of obtaining a laminate having an anchor layer on a non-absorbent substrate by applying an anchor agent containing water and an aqueous resin to a non-absorbent substrate, and drying in an oven to form an anchor layer, and
a step 2 of obtaining a laminate having an ink layer on an anchor layer by printing at least one ink selected from active energy ray curing type offset printing ink, active energy ray curing type flexographic printing ink, and active energy ray curing type resin letterpress printing ink on an anchor layer of a laminate having an anchor layer on the non-absorbent substrate, and curing with active energy ray to form an ink layer,
in which an acid value of the aqueous resin is 25 to 300 mgKOH/g, and
a glass transition temperature of the aqueous resin is 10 to 150°C.

In the producing method of the above embodiment, the aqueous resin preferably contains one or more selected from a group consisting of aqueous acrylic resin and aqueous urethane resin.

Another embodiment of the present invention related to a deinking method for a laminate having an anchor layer and an ink layer in this order on a non-absorbent substrate,
in which the anchor layer contains an aqueous resin,
an acid value of the aqueous resin is 25 to 300 mgKOH/g,
a glass transition temperature of the aqueous resin is 10 to 150°C,
the ink layer is a cured product of at least one ink selected from active energy ray curing type offset printing ink, active energy ray curing type flexographic printing ink, and active energy ray curing type resin letterpress printing ink, and
a laminate is stirred in an alkaline aqueous solution, an anchor layer is dissolved with an alkaline aqueous solution, and an ink layer is deinked from a non-absorbent substrate.

In the deinking method of the above embodiment, the aqueous resin preferably contains one or more selected from a group consisting of aqueous acrylic resin and aqueous urethane resin.

Another embodiment of the present invention relates to a recovery method for ink that filters and recovers an ink layer deinked by the deinking method of the above embodiment. Another embodiment of the present invention relates to a producing method for a recycled substrate, which removes an ink layer by the deinking method of the above embodiment and recovers a non-absorbent substrate. The disclosure of the present application is related to the subject matter described in Japanese Patent Application No. 2023-066274 filed on April 14, 2023, the entire disclosure of which is incorporated herein by reference.

### Effects of Invention

According to the present invention, it is possible to provide a laminate that has excellent physical properties as a laminate such as blocking resistance and scratch resistance, while being excellent in deinking properties for removing active energy ray curing type ink in recycling treatment of non-absorbent substrates. In addition, it is possible to provide a producing method for the laminate and a deinking method for the laminate.

### DESCRIPTION OF THE EMBODIMENTS

Hereinafter, the present invention will be described in detail. It is noted that the present invention is not limited to the following embodiments, and may be implemented with various modifications within the scope of the spirit thereof. Unless otherwise specified, "parts" means "parts by mass" and "%" means "% by mass".

### <1>Laminate

A laminate according to one embodiment of the present invention is a laminate having an anchor layer and an ink layer in this order on a non-absorbent substrate, in which the anchor layer is a layer obtained by drying an aqueous anchor agent containing an aqueous resin in an oven, and the ink layer is a layer obtained by curing an active energy ray curing type ink with active energy rays.

As will be described later, in the case of ink not containing a colorant, it becomes a varnish (also called clear ink). Thus, the ink layer becomes a varnish layer (clear ink layer). Hereinafter, the laminate will be described more specifically.

### <Ink layer>

The ink layer is composed of a cured product of active energy ray curing type ink. Hereinafter, the active energy ray curing type ink (hereinafter also referred to as "ink") used to form the ink layer will be described.

### <Active energy ray curing type ink>

In one embodiment of the present invention, the active energy ray curing type ink may be at least one ink selected from a group consisting of active energy ray curing type offset printing ink, active energy ray curing type flexographic printing ink, and active energy ray curing type resin letterpress printing ink.

These active energy ray curing type offset printing ink, active energy ray curing type flexographic printing ink, and active energy ray curing type resin letterpress printing ink are inks that have high film strength among active energy ray curing type inks and are considered difficult to deink.

### [Colorant]

In one embodiment of the present invention, the ink may contain a colorant. As the colorant, at least one of pigment and dye may be used. From the viewpoint of light resistance, pigment is preferred.

The pigment that may be used in the present invention is not particularly limited, and known pigments may be used. As the pigment, both inorganic pigments and organic pigments may be used.

In the case of the ink not containing a colorant, it becomes a varnish (clear ink).

Examples of inorganic pigments include carbon blacks such as furnace black, lamp black, acetylene black, and channel black, iron oxide, titanium oxide, and the like.

Examples of organic pigments include soluble azo pigments such as β-naphthol type, β-oxynaphthoic acid type, β-oxynaphthoic acid type anilide type, acetoacetic anilide type, and pyrazolone type; insoluble azo pigments such as β-naphthol type, β-oxynaphthoic acid type anilide type, acetoacetic anilide type monoazo, acetoacetic anilide type disazo, and pyrazolone type; phthalocyanine pigments such as copper phthalocyanine blue, halogenated (for example, chlorinated or brominated) copper phthalocyanine blue, sulfonated copper phthalocyanine blue, and metal-free phthalocyanine; and polycyclic pigments and heterocyclic pigments such as quinacridone type, dioxazine type, threne type (pyranthrone, anthanthrone, indanthrone, anthrapyrimidine, flavanthrone, thioindigo type, anthraquinone type, perinone type, perylene type, etc.), isoindolinone type, metal complex type, quinophthalone type, and diketopyrrolopyrrole type.

More specifically, as shown in the C.I. Color Index, examples of black pigments include C.I. Pigment Black 1, 6, 7, 9, 10, 11, 28, 26, 31, and the like.

Examples of white pigments include C.I. Pigment White 5, 6, 7, 12, 28, and the like.

Examples of yellow pigments include C.I. Pigment Yellow 1, 2, 3, 12, 13, 14, 16, 17, 18, 24, 73, 74, 75, 83, 93, 95, 97, 98, 100, 108, 109, 110, 114, 120, 128, 129, 138, 139, 174, 150, 151, 154, 155, 167, 174, 176, 180, 185, 213, and the like.

Examples of blue or cyan pigments include C.I. Pigment Blue 1, 2, 14, 15, 15:1, 15:2, 15:3, 15:4, 60, 62, and the like.

Examples of red or magenta pigments include C.I. Pigment Red 1, 3, 5, 19, 21, 22, 31, 38, 42, 43, 48:1, 48:2, 48:3, 48:4, 48:5, 49:1, 50, 52, 53:1, 57:1, 57:2, 58:4, 63:1, 81, 81:1, 81:2, 81:3, 81:4, 83, 90, 104, 108, 112, 114, 122, 144, 146, 148, 149, 150, 166, 168, 169, 170, 172, 173, 176, 177, 178, 184, 185, 187, 193, 202, 209, 214, 242, 254, 255, 264, 266, 269, C.I. Pigment Violet 19, and the like.

Examples of green pigments include C.I. Pigment Green 1, 2, 3, 4, 7, 8, 10, 15, 17, 26, 36, 45, 50, and the like.

Examples of purple pigments include C.I. Pigment Violet 1, 2, 3, 4, 5:1, 12, 13, 15, 16, 17, 19, 23, 25, 29, 31, 32, 36, 37, 39, 42, and the like.
Examples of orange pigments include C.I. Pigment Orange 13, 16, 20, 34, 36, 38, 39, 43, 51, 61, 63, 64, 74, and the like.

In one embodiment of the present invention, the pigments may be used alone or in combination of two or more types.

The pigments may be used in any content as long as the target density may be reproduced on the printing substrate surface. In one embodiment, the content of the pigments is preferably 5 to 30% by mass, more preferably 10 to 25% by mass, relative to the total mass of the ink.

### [(Meth)acrylate compound]

In the present specification, "(meth)acryloyl," "(meth)acrylic acid," "(meth)acrylate," and "(meth)acryloyloxy" mean "acryloyl and/or methacryloyl," "acrylic acid and/or methacrylic acid," "acrylate and/or methacrylate," and "acryloyloxy and/or methacryloyloxy," respectively, unless otherwise specified. Further, "PO" represents "propylene oxide" and "EO" represents "ethylene oxide." Further, X in EO-modified (X) and PO-modified (X) represents the number of moles of EO and PO modification, and Y in polyethylene glycol (Y) di(meth)acrylate indicates the approximate molecular weight of the polyethylene glycol portion.

In one embodiment of the present invention, the active energy ray curing type ink may contain a (meth)acrylate compound.
The (meth)acrylate compound that may be used in the present invention is not particularly limited as long as it is a compound having one or more (meth)acryloyl groups, and encompasses any form of monomer, oligomer, or polymer.
Here, "monomer" means a compound of the minimum structural unit for constituting oligomers and polymers, and "oligomer" means a polymer having structural units based on 2 to 100 monomers.

As the (meth)acrylate compound used in the present invention, specifically, the compounds shown below may be raised.

### [(Meth)acrylate compound]

### (Monomer)

Monofunctional (meth)acrylate monomers having one (meth)acryloyl group in the molecule, such as 2-ethylhexyl (meth)acrylate, 2-hydroxyethyl (meth)acrylate, 2-hydroxypropyl (meth)acrylate, β-carboxylethyl (meth)acrylate, 4-tert-butylcyclohexanol (meth)acrylate, tetrahydrofurfuryl acrylate, alkoxylated tetrahydrofurfuryl acrylate, caprolactone (meth)acrylate, lauryl (meth)acrylate, stearyl (meth)acrylate, isoamyl (meth)acrylate, 2-phenoxyethyl (meth)acrylate, isodecyl (meth)acrylate, 3,3,5-trimethylcyclohexanol (meth)acrylate, cyclohexyl (meth)acrylate, isobornyl (meth)acrylate, norbornyl (meth)acrylate, dicyclopentanyl (meth)acrylate, dicyclopentenyl(oxyethyl) (meth)acrylate, 1,4-cyclohexanedimethanol (meth)acrylate, cyclic trimethylolpropane formal (meth)acrylate, benzyl (meth)acrylate, EO-modified (2) nonylphenol acrylate, 2-methyl-2-ethyl-1,3-dioxolan-4-yl)methyl acrylate,
bifunctional (meth)acrylate monomers having two (meth)acryloyl groups in the molecule, such as 1,3-butylene glycol di(meth)acrylate, 1,4-butanediol di(meth)acrylate, 3-methyl-1,5-pentanediol di(meth)acrylate, 1,6-hexanediol di(meth)acrylate, 1,9-nonanediol di(meth)acrylate, 1,10-decanediol di(meth)acrylate, 1,2-dodecanediol di(meth)acrylate, neopentyl glycol di(meth)acrylate, polyethylene glycol (200) di(meth)acrylate, polyethylene glycol (300) di(meth)acrylate, polyethylene glycol (400) di(meth)acrylate, polyethylene glycol (600) di(meth)acrylate, hydroxypivalic acid neopentyl glycol di(meth)acrylate, dipropylene glycol di(meth)acrylate, tripropylene glycol di(meth)acrylate, EO-modified (2) 1,6-hexanediol di(meth)acrylate, PO-modified (2) neopentyl glycol di(meth)acrylate, (neopentyl glycol-modified) trimethylolpropane di(meth)acrylate, dimethylol tricyclodecane di(meth)acrylate, EO-modified (4) bisphenol A di(meth)acrylate, PO-modified (4) bisphenol A di(meth)acrylate, cyclohexanedimethanol di(meth)acrylate, dicyclopentanyl di(meth)acrylate,
trifunctional (meth)acrylate monomers having three (meth)acryloyl groups in the molecule, such as trimethylolpropane tri(meth)acrylate, EO-modified (3) trimethylolpropane tri(meth)acrylate, EO-modified (6) trimethylolpropane tri(meth)acrylate, PO-modified (3) trimethylolpropane tri(meth)acrylate, pentaerythritol tri(meth)acrylate,
tetrafunctional (meth)acrylate monomers having four acryloyl groups in the molecule, such as pentaerythritol tetra(meth)acrylate, EO-modified (4) pentaerythritol tetra(meth)acrylate, ditrimethylolpropane tetra(meth)acrylate,
pentafunctional (meth)acrylate monomers having five (meth)acryloyl groups in the molecule, such as dipentaerythritol penta(meth)acrylate, and
hexafunctional (meth)acrylate monomers having six (meth)acryloyl groups in the molecule, such as dipentaerythritol hexa(meth)acrylate, and the like.

### (Oligomer)

Examples include those having 1 to 6 (meth)acryloyl groups among urethane acrylate oligomers such as aliphatic urethane acrylate oligomers and aromatic urethane acrylate oligomers, acrylic ester oligomers, polyester acrylate oligomers, epoxy acrylate oligomers, and the like.

### [Other components]

In one embodiment of the present invention, the ink may contain, as necessary, components other than the above components, such as polymerization initiator, amine compound, resin, polymerization inhibitor, surface tension modifier, wax, extender pigment, pigment dispersant, defoaming agent, ultraviolet absorber, antioxidant, antistatic agent, and the like.

### (Polymerization initiator)

In one embodiment of the present invention, the ink may contain a polymerization initiator. The polymerization initiator preferably contains a radical or cationic polymerization initiator, and more preferably contains a photopolymerization initiator. The polymerization initiator is a compound that undergoes chemical change through the action of light or interaction with the electronically excited state of a sensitizing dye to generate radicals or cations. Among these, a photoradical polymerization initiator is preferable from the viewpoint that polymerization may be initiated by means of exposure.

In one embodiment of the present invention, the photoradical polymerization initiator is not particularly limited, and known ones may be used. Specific examples include benzophenone-based compounds, dialkoxyacetophenone-based compounds, α-hydroxyalkylphenone-based compounds, α-aminoalkylphenone-based compounds, acylphosphine oxide-based compounds, oxime ester-based compounds, thioxanthone-based compounds, and the like. The photopolymerization initiator may be used alone or in combination of two or more types.

Examples of benzophenone-based compounds include benzophenone, 2-methylbenzophenone, 3-methylbenzophenone, 4-methylbenzophenone, 2,4,6-trimethylbenzophenone, 4-phenylbenzophenone, 4,4'-bis(diethylamino)benzophenone, 4,4'-bis(dimethylamino)benzophenone, [4-(methylphenylthio)phenyl]-phenylmethanone, 2-chloro-4-phenyl-benzophenone, 1-{4-[(4-benzoylphenylsulfanyl)phenyl]-2-methyl-2-(4-methylbenzenesulfonyl)propan-1-one, polybutylene glycol bis(4-benzoylphenoxy)acetate, and the like.

Examples of dialkoxyacetophenone-based compounds include 2,2-dimethoxy-2-phenylacetophenone, dimethoxyacetophenone, diethoxyacetophenone, and the like.

Examples of α-hydroxyalkylphenone-based compounds include 1-hydroxycyclohexylphenylketone, 2-hydroxy-2-methyl-1-phenyl-propan-1-one, 1-[4-(2-hydroxymethoxy)-phenyl]-2-hydroxy-2-methyl-1-propan-1-one, 2-hydroxy-1-{4-[4-(2-hydroxy-2-methyl-propionyl)-benzyl]phenyl}-2-methyl-propan-1-one, oligo[2-hydroxy-2-methyl-1-[4-(1-methylvinyl)phenyl]propanone], a mixture of 2,3-dihydro-6-(2-hydroxy-2-methyl-1-oxopropyl)-1,1,3-trimethyl-3-[4-(2-hydroxy-2-methyl-1-oxopropyl)phenyl]-1H-indene and 2,3-dihydro-5-(2-hydroxy-2-methyl-1-oxopropyl)-1,1,3-trimethyl-3-[4-(2-hydroxy-2-methyl-1-oxopropyl)phenyl]-1H-indene, 2-hydroxy-1-[4-[4-(2-hydroxy-2-methylpropynyl)benzyl]phenyl]-2-methylpropan-1-one, 2-hydroxy-1-[4-[4-(2-hydroxy-2-methylpropanoyl)phenoxy]phenyl]-2-methylpropan-1-one, 1-[4-(1,1-dimethylethyl)phenyl]-2-hydroxy-2-methylpropan-1-one, and the like.

Examples of α-aminoalkylphenone-based compounds include 2-methyl-1-[4-(methoxythio)-phenyl]-2-morpholinopropan-1-one, 2-benzyl-2-dimethylamino-1-(4-morpholinophenyl)-butanone, 1,2-(dimethylamino)-2-[(4-methylphenyl)methyl]-1-[4-(4-morpholinyl)phenyl]-1-butanone, 1-(9,9-dibutyl-9H-fluoren-2-yl)-2-methyl-2-morpholin-4-yl-propan-1-one, polyethylene glycol di(β-4-[4-(2-dimethylamino-2-benzyl)butanonylphenyl]piperazine)propinate, 2-benzyl-2-dimethylamino-1-(4-piperidinylphenyl)-1-butanone, 1-(biphenyl-4-yl)-2-methyl-2-morpholinopropan-1-one, 1-(biphenyl-4-yl)-2-methoxy-2-morpholinopropan-1-one, and the like.

Examples of acylphosphine oxide-based compounds include diphenylacylphenylphosphine oxide, 2,4,6-trimethylbenzoyl-diphenylphosphine oxide, bis(2,4,6-trimethylbenzoyl)-phenylphosphine oxide, tris(phenyl(2,4,6-trimethylbenzoyl)phosphinic acid)polyethylene glycol ester, ethyl(2,4,6-trimethylbenzoyl)phenylphosphinate, bis(2,4,6-dimethoxybenzoyl)-2,4,4-trimethylpentylphosphine oxide, and the like.

Examples of oxime ester-based compounds include 1-[4-(phenylthio)phenyl]octane-1,2-dione,2-benzoyloxime, ethanone,1-[9-ethyl-6-(2-methylbenzoyl)-9H-carbazol-3-yl]-,1-(o-acetyloxime), 3-cyclopentyl-1-(4-(phenylthio)phenyl)propane-1,2-dione-2-(o-benzoyloxime), 1-[9-ethyl-6-(2-methylbenzoyl)-9H-carbazol-3-yl]-3-cyclopentylpropane-1-(o-acetyloxime), methanone,[8-[[(acetyloxy)imino] [2-(2,2,3,3-tetrafluoropropoxy)phenyl]methyl]-11-(2-ethylhexyl)-11H-benzo[a]carbazol-5-yl]-,(2,4,6-trimethylphenyl), 1-phenyl-1,2-propanedione-2-(o-ethoxycarbonyl)oxime, and the like.

Examples of thioxanthone-based compounds include 2-isopropylthioxanthone, 2,4-dimethylthioxanthone, 2,4-diethylthioxanthone, 2,4-dichlorothioxanthone, 1-chloro-4-propylthioxanthone, 2-chlorothioxanthone, poly(oxy-1,4-butanediyl),α-[2-[(9-oxo-9H-thioxanthenyl)oxy]acetyl]-ω-[[2-[(9-oxo-9H-thioxanthenyl)oxy]acetyl]oxy]-, 1,3-di({α-[1-chloro-9-oxo-9H-thioxanthen-4-yl]oxy}acetylpoly[oxy(1-methylethylene)])oxy]-2,2-bis({α-[1-chloro-9-oxo-9H-thioxanthen-4-yl]oxy}acetylpoly[oxy(1-methylethylene)])oxymethyl)propane, and the like.

The content of the photopolymerization initiator is preferably 1 to 20% by mass, and more preferably 5 to 15% by mass, relative to the total mass of the ink.

### (Amine compound)

In one embodiment of the present invention, the ink may contain an amine compound. The amine compound is not particularly limited, and known amine compounds may be used. By using an amine compound as a component of the active energy ray curing type ink, it is expected to enhance the effect of hydrogen abstraction type photopolymerization initiators.

Specific examples include, for example, N,N-dimethylaniline, N,N-diethylaniline, N,N-dimethyl-p-toluidine, ethyl 4-(dimethylamino)benzoate, N,N-dihydroxyethylaniline, triethylamine and N,N-dimethylhexylamine, poly(oxy-1,2-ethanediyl,α-[4-(dimethylamino)benzoyl]-ω-[[4-(dimethylamino)benzoyl]oxy]-, bisN,N-[2-(4-dimethylaminobenzoyl)oxyethylene-1-yl]methylamine, poly(oxy-1,2-ethanediyl),α-[4-(dimethylamino)benzoyl]-ω-[[4-(dimethylamino)benzoyl]oxy]-, poly[oxy(methyl-1,2-ethanediyl), α-[4-(dimethylamino)benzoyl-ω-butoxy-, 2-butoxyethyl-4-(dimethylamino)benzoate, 2-(dimethylamino)ethyl benzoate, and the like. The amine compound may be used alone or in combination of two or more types.

### (Resin)

In one embodiment of the present invention, the ink may contain a resin. By containing a resin, curing shrinkage of the coating film that occurs during curing is alleviated, curling of the substrate is suppressed, and furthermore, adhesion to the anchor agent is improved.

The resin may be used alone or in combination of two or more types. Further, the content of the resin is preferably 1 to 20% by mass relative to the total mass of the ink.

Specific examples of the resin include polyvinyl chloride, (meth)acrylic resin, styrene (meth)acrylic resin, epoxy resin, polyester resin, polyurethane resin, cellulose derivatives (for example, ethyl cellulose, cellulose acetate, nitrocellulose), vinyl chloride-vinyl acetate copolymer, polyamide resin, polyvinyl acetal resin, diallyl phthalate resin, allyl resin, alkyd resin, rosin-modified alkyd resin, petroleum resin, urea resin, synthetic rubber such as butadiene-acrylonitrile copolymer, and the like. Among these, from the viewpoint of dispersibility, diallyl phthalate resin and polyester resin are more preferable.

### (Polymerization inhibitor)

In one embodiment of the present invention, the ink may contain a polymerization inhibitor. Specific examples of the polymerization inhibitor include 4-methoxyphenol, hydroquinone, methylhydroquinone, t-butylhydroquinone, 2,6-di-t-butyl-4-methylphenol, phenothiazine, aluminum salt of N-nitrosophenylhydroxylamine, and the like.

The content of the polymerization inhibitor is preferably 0.01 to 2% by mass relative to the total mass of the ink from the viewpoint of enhancing the stability of the ink while maintaining curability.

### (Wax)

In one embodiment of the present invention, the ink may contain wax. By containing wax, friction resistance, scratch resistance, anti-blocking properties, slip properties, and scuff resistance may be easily improved. The wax is not particularly limited, and known waxes may be used. For example, there are natural waxes and synthetic waxes.

Examples of natural waxes include carnauba wax, Japan wax, lanolin, montan wax, paraffin wax, microcrystalline wax, and the like.

Examples of synthetic waxes include Fischer-Tropsch wax, polyethylene wax, polypropylene wax, polytetrafluoroethylene wax, and the like.

The content of the wax is preferably 0.1 to 5% by mass relative to the total mass of the ink.

### (Extender pigment)

In one embodiment of the present invention, the ink may contain an extender pigment. Examples of extender pigments include clay, talc, barium sulfate, calcium carbonate, heavy calcium carbonate, barium carbonate, magnesium carbonate, silica, bentonite, and the like. Although not particularly limited, in one embodiment, talc may be suitably used.

### (Pigment dispersant)

In one embodiment of the present invention, the ink preferably contains a pigment dispersant in order to further improve pigment dispersibility. The pigment dispersant is not particularly limited, and known pigment dispersants may be used. Among these, resin-type pigment dispersants having basic functional groups are preferred, and examples of the basic functional groups include primary, secondary, or tertiary amino groups, and nitrogen-containing heterocycles such as pyridine, pyrimidine, pyrazine, and the like.

Further, as the skeleton constituting the resin-type pigment dispersant, a fatty acid amine skeleton and/or a urethane skeleton are more preferred because good pigment dispersibility may be easily obtained.

The pigment dispersant may be obtained as a commercially available product. Examples include Ajisper series manufactured by Ajinomoto Fine-Techno Co., Inc. (Ajisper PB821, PB822, PB824, etc.), Solsperse series manufactured by Lubrizol Corporation (Solsperse 20000, Solsperse 32000, Solsperse 38500, etc.), Disperbyk series manufactured by BYK-Chemie GmbH (BYK-162, BYK-168, BYK-183, etc.), and the like.

The content of the pigment dispersant is preferably 0.1 to 10% by mass, more preferably 0.2 to 5% by mass, relative to the total mass of the ink.

In one embodiment of the present invention, the active energy ray curing type ink used to form the ink layer is preferably at least one ink selected from active energy ray curing type offset printing ink, active energy ray curing type flexographic printing ink, and active energy ray curing type resin letterpress printing ink. Among active energy ray curing type inks, these inks have high film strength and are difficult to deink. Thus, in laminates formed using these inks, the effects of the present invention are particularly pronounced.

### <Anchor layer>

In one embodiment of the present invention, the anchor layer of the laminate contains an aqueous resin. Such an anchor layer may be obtained by coating an aqueous anchor agent containing an aqueous resin and drying it.

### [Aqueous anchor agent]

In one embodiment of the present invention, the aqueous anchor agent contains water and an aqueous resin.

### [Aqueous resin]

Examples of the aqueous resin include aqueous acrylic resin, aqueous urethane resin, aqueous polyester resin, and the like. These resins may be used alone or in combination of two or more. Among these, it is preferable to use aqueous acrylic resin or aqueous urethane resin, and it is particularly preferable to use aqueous acrylic resin.

### [Acid value of aqueous resin]

The acid value of the aqueous resin is preferably 25 to 300 mgKOH/g. In the case of the acid value of the aqueous resin being in the above range, a resin with good alkali solubility is obtained, and the deinking characteristics of active energy ray curing type inks such as UV inks are improved. The acid value of the aqueous resin is preferably 30 to 275 mgKOH/g, and more preferably 30 to 250 mgKOH/g.

### [Glass transition temperature of aqueous resin]

The glass transition temperature (Tg) of the aqueous resin is preferably 10 to 150°C. In the case of the glass transition temperature being in the above range, good blocking resistance and good substrate adhesion may be easily obtained. The glass transition temperature (Tg) of the aqueous resin is preferably 10 to 120°C, and more preferably 10 to 100°C.

### [Aqueous acrylic resin]

The aqueous acrylic resin is preferably a resin obtained by making an acrylic resin having carboxyl groups aqueous (water-soluble) in the presence of an emulsifier and/or a basic compound. The acrylic resin may be a resin having acrylic monomer structural units. Furthermore, it may be an acrylic resin obtained by copolymerizing styrenic monomers, maleic acid-based monomers, and the like.

As the acrylic monomer, alkyl esters of (meth)acrylic acid, alkylamides of (meth)acrylic acid, hydroxyalkyl esters of (meth)acrylic acid, and the like may be suitably mentioned. It is noted that the alkyl groups constituting the alkyl esters and the like preferably have 1 to 18 carbon atoms.

As the styrenic monomer, for example, styrene, α-methylstyrene, o-methylstyrene, p-methylstyrene, m-methylstyrene, and the like are suitable. As the maleic acid-based monomer, maleic anhydride and maleic acid are suitable, and they may be in the form of alkyl esters having 1 to 18 carbon atoms, alkylamides having 1 to 18 carbon atoms, or hydroxyalkyl esters having 2 to 4 carbon atoms.
Furthermore, in other embodiments, the aqueous acrylic resin may use components other than those described above as reaction components for producing the resin. For example, known monomers that are generally used as reaction components for aqueous acrylic resins may be further used.

Using these respective reaction components, an acrylic resin may be produced by known producing methods. Further, as a method for making the resin water-soluble, a method using known emulsifiers or polymeric protective colloids may be applied. As an alternative method, a method of introducing carboxyl groups into the molecule and neutralizing with a basic compound may be provided. As the basic compound, an amine compound is preferable, and the use of ammonia is preferable. Further, the aqueous acrylic resin is preferably an aqueous emulsion, more preferably a core-shell type acrylic emulsion, and the core/shell ratio (core:shell) of the acrylic emulsion is preferably 10:90 to 70:30.

### [Aqueous urethane resin]

As the aqueous urethane resin, a form that is a polyurethane resin synthesized from polyol, hydroxy acid, and polyisocyanate is preferable. Alternatively, as another form, a form that is a polyurethane urea resin containing polyurethane urea chain-extended with a urethane prepolymer having isocyanate groups at terminals synthesized from polyol, hydroxy acid, and polyisocyanate and polyamine is preferable.

The aqueous urethane resin and polyurethane urea resin are made water-soluble by introducing ionic groups such as carboxyl groups and sulfone groups into the resin and neutralizing with a basic compound in the case of reacting polyol with polyisocyanate. From the viewpoint of water resistance, carboxyl groups are preferable as the ionic groups.

### <2> Producing method for laminate

One embodiment of the present invention relates to a producing method for the laminate of the above embodiment. The laminate is obtained by printing active energy ray curing type ink on an anchor layer formed from an anchor agent coated on a non-absorbent substrate, and curing with active energy rays to form an ink layer.

More specifically, in one embodiment, the producing method for the laminate includes:
Step 1 of obtaining a laminate having an anchor layer on a non-absorbent substrate by applying an aqueous anchor agent containing aqueous resin to the non-absorbent substrate and drying in an oven to form an anchor layer, and
Step 2 of obtaining a laminate having an ink layer on the anchor layer by printing active energy ray curing type ink on the anchor layer of the laminate having the anchor layer on the non-absorbent substrate and curing with active energy rays to form an ink layer.

As described above, by using an ink that does not contain a colorant (varnish or clear ink), a laminate having a varnish layer on the anchor layer may be obtained.

Further, active energy ray curing type varnish may be further printed on the ink and cured with active energy rays to obtain a laminate having a varnish layer on the ink layer.

The non-absorbent substrate (hereinafter also referred to as substrate) is not particularly limited, and known substrates may be used. The substrate may have a single-layer or multi-layer structure. The shape of the substrate is not particularly limited. For example, the substrate may have various shapes such as sheets, films, bottle caps, cups, and the like. The material constituting the substrate may be at least one selected from a group consisting of plastics, resins, and metals. Specifically, examples include plastic substrates such as polypropylene (PP), polyethylene (PE), polyethylene terephthalate (PET), aluminum, and the like; plastic substrates having inorganic vapor-deposited layers such as silica, alumina, and the like; substrates composed of resins such as polyvinyl chloride (PVC), polystyrene (PS), nylon, cellophane, and the like; and metal foils or metal sheets such as aluminum foil. Further, the substrate may also be composed of resins such as ABS resin (acrylonitrile, butadiene, and styrene copolymer resin), PC resin (polycarbonate resin), and the like.
Various additives such as antistatic agents, antifogging agents, ultraviolet inhibitors, and the like may be used in the substrate. For example, various additives may be applied to the substrate surface. In one embodiment, as described later, from the viewpoint of recovering and reusing the non-absorbent substrate, plastic substrates composed of PP, PE, PET, and the like are preferred.

In the above producing method, the method for printing the active energy ray curing type ink is not particularly limited as long as active energy ray curing type offset printing ink, active energy ray curing type flexographic printing ink, and active energy ray curing type resin letterpress printing ink may be printed. For example, it is preferably any of offset printing using active energy ray curing type offset printing ink, resin letterpress printing using active energy ray curing type resin letterpress printing ink, or flexographic printing using active energy ray curing type flexographic printing ink.

In the above producing method, the method for applying the aqueous anchor agent is not particularly limited, and known methods may be used. Specifically, examples include roll coater, gravure coater, flexo coater, air doctor coater, blade coater, air knife coater, squeeze coater, impregnation coater, transfer roll coater, kiss coater, curtain coater, cast coater, spray coater, die coater, offset printing, gravure printing, resin letterpress printing, flexographic printing, and the like.

In the above producing method, the active energy ray source used in curing the ink is not particularly limited, and known sources may be used. Specifically, examples include mercury lamps, xenon lamps, metal hydride lamp, excimer lamps, LEDs (light emitting diodes) such as ultraviolet light emitting diodes (UV-LED) and ultraviolet laser diodes (UV-LD), EB (electron beam) irradiation devices, gas or solid lasers, and the like.

### <3>Deinking method of laminate

One embodiment of the present invention relates to a deinking method of a laminate. Deinking means removing ink components from a printed non-absorbent substrate (non-absorbent substrate having an ink layer). Thus, the deinking method includes a step for removing ink components from the non-absorbent substrate.

### (Ink component removal step using alkaline aqueous solution)

In one embodiment of the present invention, for example, in the case of contacting the laminate of the above embodiment with an alkaline aqueous solution in a treatment tank containing the alkaline aqueous solution, the ink layer may be easily detached. Thus, the deinking method includes a step of contacting the laminate with an alkaline aqueous solution to detach the ink layer.

### (Alkaline aqueous solution)

In one embodiment, the alkaline aqueous solution used in the deinking method may be an aqueous solution containing an alkaline compound. For example, based on the total mass of the aqueous solution, the content of the alkaline compound is preferably 0.5 to 10% by mass, and more preferably 1 to 5% by mass. The alkaline compound is not particularly limited. For example, sodium hydroxide (NaOH), potassium hydroxide (KOH), calcium hydroxide (Ca(OH)₂), ammonia, barium hydroxide (Ba(OH)₂), sodium carbonate (Na₂CO₃), and the like are preferably raised. Preferably, it is NaOH and/or KOH.

### (Ink component removal step)

The mechanism by which the ink layer may be detached from the laminate by contact between the alkaline aqueous solution and the laminate is presumed to be that the anchor layer contains the aqueous resin, allowing the alkaline aqueous solution to penetrate from the surface of the anchor layer and/or the cross-section of the laminate, thereby dissolving the anchor layer. The laminate may be a laminate that has formed an anchor layer on a non-absorbent substrate, further formed an ink layer, and then undergone processes such as bag-making to become the shape of a packaging container. Such a shaped laminate is preferably cut or crushed in a recycling process or before, and contacted with the alkaline aqueous solution in a state where the cross-section of the laminate is exposed.

The contact between the laminate and the alkaline aqueous solution is preferably carried out while stirring. The stirring means is not particularly limited, and known stirring equipment such as general dispersers, radial flow turbine blades, axial flow turbine blades, paddle blades, propeller blades, anchor blades, and high shear mixers may be raised. Conditions such as stirring rotation number are not particularly limited. For example, in the case of a 2L flask scale, depending on the shape and size of the stirring blade, 100 to 350 rpm is preferable. The stirring time is preferably 15 minutes or more and 24 hours or less.

### <4> Producing method for recycled substrate

One embodiment of the present invention relates to a producing method for a recycled substrate that recovers a non-absorbent substrate from a laminate. The recycled substrate means a substrate recovered in a state where ink components have been removed from a printed non-absorbent substrate (non-absorbent substrate having an ink layer). Thus, the producing method for a recycled substrate includes a step of deinking the laminate and a step of recovering the non-absorbent substrate.

Thus, one embodiment of the present invention is a producing method for a recycled substrate that deinks an ink layer from a laminate having an anchor layer and an ink layer in this order on a non-absorbent substrate, and recovers the non-absorbent substrate,
in which the anchor layer contains an aqueous resin,
an acid value of the aqueous resin is 25 to 300 mgKOH/g,
a glass transition temperature of the aqueous resin is 10 to 150°C, and
the ink layer is a cured product of at least one ink selected from active energy ray curing type offset printing ink, active energy ray curing type flexographic printing ink, and active energy ray curing type resin letterpress printing ink.

The producing method for the recycled substrate may include bringing the laminate into contact with an alkaline aqueous solution, dissolving the anchor layer with the alkaline aqueous solution, and deinking the ink layer from the non-absorbent substrate,
separating and recovering the non-absorbent substrate from the alkaline aqueous solution,
washing and drying the recovered non-absorbent substrate with water to obtain a recycled substrate

In the above embodiment, the aqueous resin preferably includes one or more selected from a group consisting of aqueous acrylic resin and aqueous urethane resin. Further, the non-absorbent substrate is preferably a substrate including PP, PE, or PET.

### (Substrate recovery step)

In one embodiment, the producing method for a recycled substrate includes a step of recovering the non-absorbent substrate after detaching the ink layer from the laminate. The step of recovering the non-absorbent substrate means a step of separating and recovering the non-absorbent substrate from a treatment tank in which the alkaline aqueous solution, fragments of the detached ink layer, the non-absorbent substrate, and the like are mixed after treatment of the laminate with the alkaline aqueous solution.

The recovered non-absorbent substrate is preferably obtained with high purity. The recovery method of the non-absorbent substrate is not particularly limited. For example, separation and recovery based on size difference between the non-absorbent substrate and fragments of the ink layer is preferred. As another example, separation and recovery based on specific gravity difference is also preferred. These methods may be appropriately combined for separation and recovery. Among these, in one embodiment of the producing method for a recycled substrate, it is preferred to include a separation and recovery step based on specific gravity difference, and more preferably, the separation and recovery step based on specific gravity difference and the separation and recovery step based on size difference may be used in combination.

It is noted that in the separation and recovery step based on specific gravity difference, it is preferred to recover only the substrate that floats in the alkaline aqueous solution in the treatment tank. If impurity components and fragments of the ink layer in the alkaline aqueous solution settle, separation from the non-absorbent substrate becomes easy, and only the non-absorbent substrate may be recovered with higher accuracy, which is preferred. In this case, the physical properties and transparency of the recycled non-absorbent substrate may be easily improved after recovery. The method of separation based on specific gravity difference may be a conventionally known method, such as a method using a fluidized bed or a method using a centrifuge.

After detaching the ink layer from the laminate, the non-absorbent substrate is recovered. After recovery, the recycled non-absorbent substrate may be obtained through steps of washing the non-absorbent substrate with water and drying. At this time, it is preferred that any contaminant components including fragments of the detached ink layer adhere to the recycled non-absorbent substrate as little as possible. The non-absorbent substrate recycled as described above may be processed into pellets by an extruder or the like and reused as recycled resin. The application of the recycled resin is not limited, and it may be processed into a colorless transparent film form or may be processed as a molded product with a colorant added.

In one embodiment, various additives may be added as necessary in the case of bringing the laminate into contact with the alkaline aqueous solution and stirring. For example, a surfactant may be suitably used, and among these, a nonionic surfactant is preferred. The nonionic surfactant may be a compound known as a deinking agent in the technical field.

For example, commercially available deinking agents include deinking agents DI-7020, DI-7027, DI-7250, DI-767 manufactured by Kao Corporation, DIA-Z series and DIA-Y series manufactured by Nissin Chemical Co., Ltd., and Liptol series manufactured by Lion Specialty Chemicals Co., Ltd.

### (Ink recovery step)

In the substrate recovery step, the ink may be recovered by filtering the alkaline aqueous solution after substrate recovery. At this time, since the material of the anchor layer is soluble in the alkaline aqueous solution, it is possible to extract the ink component with high purity. Thus, in one embodiment of the present invention, a recovery method of ink may be provided, which includes filtering and recovering the ink layer that has been deinked by the recycled substrate producing method of the above embodiment.

### Examples

Examples and comparative examples are shown below to specifically describe the present invention. However, the present invention is not limited in any way by the following examples. It is noted that in the examples and comparative examples, "parts" and "%" represent "parts by mass" and "% by mass", respectively.

### 1. Materials of laminate

### <1-1>Preparation example of anchor agent

### (Anchor agent 1)

99.0 parts of Resin 1 (Hiros X X436 manufactured by Seiko PMC Co., Ltd.) and 1.0 parts of polyethylene wax (Chemipearl W500 manufactured by Mitsui Chemicals, Inc.) were added, and stirred with a disper for 10 minutes to prepare an aqueous anchor agent (AC1).

### (Anchor agents 2 to 13)

Aqueous anchor agents (AC2) to aqueous anchor agent (AC13) were prepared with the same formulation as anchor agent 1, except that resin 1 was changed to resins 2 to 13 as described in Table 1.

### (Anchor agent 14)

79.0 parts of Resin 14 (Megarpur IM30AL manufactured by MEGARA), 10.0 parts of ethyl acetate, 10.0 parts of isopropyl alcohol, and 1.0 parts of polyethylene wax (Chemipearl W500 manufactured by Mitsui Chemicals, Inc.) were added, and stirred with a disper for 10 minutes to prepare an oil-based anchor agent (AC14).

### (Anchor agent 15)

TMPTA(EO) 20.0 parts, DiTMPTA 60.0 parts, DPHA 10.0 parts, 4MBP 6.0 parts, TPO 3.0 parts, and EDB 1.0 parts were mixed, and stirred and mixed using a butterfly mixer to prepare a UV flexographic acrylic anchor agent (AC15).

### (Anchor agent 16)

TMPTA(EO) 10.0 parts, DiTMPTA 18.0 parts, DPHA 7.0 parts, 4MBP 5.0 parts, TPO 2.0 parts, EDB 1.0 parts, and 57.0 parts of diallyl phthalate resin varnish prepared as described below were mixed, and stirred and mixed using a butterfly mixer to prepare a UV offset acrylic anchor agent (AC16).

It is noted that the diallyl phthalate resin varnish (active energy ray curing type resin varnish) used in the above anchor agent 16 and ink production example 2 described below was prepared as follows.

### (Preparation example of diallyl phthalate resin varnish)

DPHA 65.0 parts, TMPTA(EO) 6.5 parts, and DiTMPTA 3.5 parts were mixed, and the temperature was raised to 100°C while stirring. Next, 25.0 parts of diallyl phthalate resin was mixed and dissolved while maintaining the temperature at 100°C to prepare a diallyl phthalate resin varnish.

### <1-2>Ink production examples

The rosin-modified phenolic resin varnish (oil-based resin varnish) used in ink production example 1 described below was prepared as follows.

### (Preparation example of rosin-modified phenolic resin)

In a reaction vessel, 54.3 parts of gum rosin was reacted with a phenolic resin that had been prepared by reacting 30.8 parts of tertiary butylphenol and 9.4 parts of 92 wt% paraformaldehyde in xylene solvent under sodium hydroxide catalyst at 100°C for 9.4 hours with water removal, by dropping the phenolic resin at 150°C and reacting for 2 hours. Furthermore, 5.4 parts of glycerin was added, and the mixture was reacted at 250°C for 15 hours using 0.1 parts of calcium oxide as a catalyst to prepare a rosin phenolic resin.

### (Preparation example of rosin-modified phenolic resin varnish)

Next, in a four-neck flask equipped with a stirrer, reflux condenser with water separator, and thermometer, 45.0 parts of the rosin-modified phenolic resin as a binder resin, 44.0 parts of soybean oil, 10.0 parts of soybean oil fatty acid normal butyl ester, and 1.0 parts of ALCH were heated and stirred at 190°C for 1.0 hour to prepare a rosin-modified phenolic resin varnish.

### (Ink production example 1 (oil-based ink))

17.0 parts of RAVEN 1080 Ultra, 3.0 parts of BA-2550, 59.0 parts of the rosin-modified phenolic resin varnish obtained in the production example described above, 20.0 parts of soybean oil, 0.5 parts of MK dryer, and 0.5 parts of drying inhibitor CP were mixed and stirred and mixed using a butterfly mixer, then dispersed with a three-roll mill so that the maximum particle size became 7.5 µm or less to prepare an ink.

### (Ink production example 2 (UV ink 1)) (Active energy ray curing type offset printing ink, active energy ray curing type resin letterpress printing ink)

17.0 parts of RAVEN 1080 Ultra, 3.0 parts of BA-2550, 6.0 parts of TMPTA(EO), 13.0 parts of DiTMPTA, 7.0 parts of DPHA, 3.0 parts of 379, 1.5 parts of DEABP, 1.5 parts of DETX, 1.0 parts of EDB, and 47.0 parts of the diallyl phthalate resin varnish obtained in the production example described above were mixed and stirred and mixed using a butterfly mixer, then dispersed with a three-roll mill so that the maximum particle size became 7.5 µm or less to prepare an ink.

### (Ink production example 3 (UV ink 2)) (Active energy ray curing type offset printing ink, active energy ray curing type resin letterpress printing ink)

17.0 parts of RAVEN 1080 Ultra, 3.0 parts of BA-2550, 6.0 parts of TMPTA(EO), 13.0 parts of DiTMPTA, 7.0 parts of DPHA, 3.0 parts of 379, 1.5 parts of DEABP, 1.5 parts of DETX, 1.0 parts of EDB, and 47.0 parts of MIRAMER PS-4500 were mixed and stirred and mixed using a butterfly mixer, then dispersed with a three-roll mill so that the maximum particle size became 7.5 µm or less to prepare an ink.

### (Ink production example 4 (LED ink)) (Active energy ray curing type offset printing ink, active energy ray curing type resin letterpress printing ink))

17.0 parts of RAVEN 1080 Ultra, 3.0 parts of BA-2550, 6.0 parts of TMPTA(EO), 10.0 parts of DiTMPTA, 7.0 parts of DPHA, 3.0 parts of 379, 2.0 parts of TPO, 2.0 parts of DEABP, 2.5 parts of 4MBP, 2.5 parts of DETX, 1.0 parts of EDB, and 44.0 parts of diallyl phthalate resin varnish were mixed and stirred and mixed using a butterfly mixer, then dispersed with a three-roll mill so that the maximum particle size became 7.5 µm or less to prepare an ink.

### (Ink production example 5 (UV flexo ink)) (Active energy ray curing type flexographic printing ink)

15.0 parts of RAVEN 1080 Ultra, 1.0 part of BA-2550, 16.0 parts of TMPTA(EO), 5.0 parts of DiTMPTA, 7.0 parts of DPHA, 3.0 parts of 379, 2.0 parts of DEABP, 2.5 parts of 4MBP, 2.5 parts of DETX, 1.0 part of EDB, and 6.0 parts of Solsperse24000 were stirred and mixed using a butterfly mixer, then dispersed with a three-roll mill so that the maximum particle size became 7.5 µm or less to prepare an ink. Thereafter, 39.0 parts of TMPTA(EO) were added and stirred and mixed using a butterfly mixer to prepare an ink.

### (Ink production example 6 (UV yellow ink)) (Active energy ray curing type offset printing ink, active energy ray curing type resin letterpress printing ink))

15.0 parts of Permanent Yellow BHS, 6.0 parts of TMPTA(EO), 18.0 parts of DiTMPTA, 7.0 parts of DPHA, 3.0 parts of 379, 1.5 parts of DEABP, 1.5 parts of DETX, 1.0 part of EDB, and 47.0 parts of diallyl phthalate resin varnish were mixed and stirred and mixed using a butterfly mixer, then dispersed with a three-roll mill so that the maximum particle size became 7.5 µm or less to prepare an ink.

### (Ink production example 7 (UV red ink)) (Active energy ray curing type offset printing ink, active energy ray curing type resin letterpress printing ink))

20.0 parts of Permanent Rubine L5B-01, 6.0 parts of TMPTA(EO), 13.0 parts of DiTMPTA, 7.0 parts of DPHA, 3.0 parts of 379, 1.5 parts of DEABP, 1.5 parts of DETX, 1.0 part of EDB, and 47.0 parts of diallyl phthalate resin varnish were mixed and stirred and mixed using a butterfly mixer, then dispersed with a three-roll mill so that the maximum particle size became 7.5 µm or less to prepare an ink.

### (Ink production example 8 (UV blue ink)) (Active energy ray curing type offset printing ink, active energy ray curing type resin letterpress printing ink))

20.0 parts of Heliogen Blue D7088, 6.0 parts of TMPTA(EO), 13.0 parts of DiTMPTA, 7.0 parts of DPHA, 3.0 parts of 379, 1.5 parts of DEABP, 1.5 parts of DETX, 1.0 part of EDB, and 47.0 parts of diallyl phthalate resin varnish were mixed and stirred and mixed using a butterfly mixer, then dispersed with a three-roll mill so that the maximum particle size became 7.5 µm or less to prepare an ink.

### (Ink production example 9 (EB ink)) (Active energy ray curing type offset printing ink, active energy ray curing type resin letterpress printing ink))

17.0 parts of RAVEN 1080 Ultra, 3.0 parts of BA-2550, 6.0 parts of TMPTA(EO), 13.0 parts of DiTMPTA, 7.0 parts of DPHA, and 54.0 parts of diallyl phthalate resin varnish were mixed and stirred and mixed using a butterfly mixer, then dispersed with a three-roll mill so that the maximum particle size became 7.5 µm or less to prepare an ink.

### (Varnish production example 1 (UV varnish)) (Active energy ray curing type offset printing varnish, active energy ray curing type resin letterpress printing varnish))

6.0 parts of TMPTA(EO), 13.0 parts of DiTMPTA, 7.0 parts of DPHA, 6.0 parts of 184, 2.0 parts of TPO, 1.0 part of EDB, 3.0 parts of filler, and 62.0 parts of diallyl phthalate resin varnish were mixed and stirred and mixed using a butterfly mixer, then dispersed with a three-roll mill so that the maximum particle size became 7.5 µm or less to prepare a varnish.

The details of the materials used in the above-described anchor agent production examples and ink production examples are as follows.

### [Colorant]

- Permanent Yellow BHS: Permanent Yellow BHS (C.I. Pigment Yellow 174) manufactured by Clariant
- Permanent Rubine L5B-01: Permanent Rubine L5B-01 (C.I. Pigment Red 57:1) manufactured by Clariant
- HELIOGEN BLUE D7088: HELIOGEN BLUE D7088 (C.I. Pigment Blue 15:3) manufactured by BASF
- Raven 1080 Ultra: Raven 1080 Ultra Powder (C.I. Pigment Black 7) manufactured by Bilra Carbon
- BA-2550: Alkali Blue Toner BA-2550 (C.I. Pigment Blue 61) manufactured by Morimura Bros.

### [Extender pigment]

- Filler: Hi-Filler #5000PJ, talc manufactured by Matsumura Sangyo

### [(Meth)acrylate compound]

- TMPTA(EO): LAROMER LR8863, trimethylolpropane ethylene oxide modified triacrylate manufactured by BASF
- DiTMPTA: EBECRYL1142, ditrimethylolpropane tetraacrylate manufactured by Daicel-Allnex
- DPHA: MIRAMER M600, dipentaerythritol hexaacrylate manufactured by MIWON
- PS-4500: MIRAMER PS-4500, polyester acrylate oligomer manufactured by MIWON

### [Resin]

Resin 1: Hiros X X436 manufactured by Seiko PMC (acid value 33 mgKOH/g, glass transition temperature 21°C)
Resin 2: JONCRYL PDX-7615 manufactured by BASF (acid value 51 mgKOH/g, glass transition temperature 33°C)
Resin 3: JONCRYL 63D manufactured by BASF (acid value 213 mgKOH/g, glass transition temperature 73°C)
Resin 4: Neocryl A-2091 manufactured by Covestro (acid value 62 mgKOH/g, glass transition temperature 98°C)
Resin 5: JONCRYL PDX-7732 manufactured by BASF (acid value 87 mgKOH/g, glass transition temperature 12°C)
Resin 6: Emapoly SG5157 manufactured by Gifu Ceramic Manufacturing Co. (acid value 218 mgKOH/g, glass transition temperature 102°C)
Resin 7: Acris TGV40 manufactured by Gifu Ceramic Manufacturing Co. (acid value 54 mgKOH/g, glass transition temperature 109°C)
Resin 8: Takelac W605 manufactured by Mitsui Chemicals (acid value 25 mgKOH/g, glass transition temperature 100°C)
Resin 9: Hiros X J-140A manufactured by Seiko PMC (acid value 33 mgKOH/g, glass transition temperature 6°C)
Resin 10: Neocryl A-1127 manufactured by Covestro (acid value 18 mgKOH/g, glass transition temperature 5°C)
Resin 11: LIOCRYL PFX0302 manufactured by Toyochem (acid value 150 mgKOH/g, glass transition temperature 4°C)
Resin 12: Acrit WEM200U manufactured by Taisei Fine Chemical (acid value 6 mgKOH/g, glass transition temperature 31°C)
Resin 13: JP-W2 manufactured by BASF (acid value 312 mgKOH/g, glass transition temperature 102°C)
Resin 14: Megarpur IM30AL manufactured by MEGARA (acid value 0 mgKOH/g, glass transition temperature -10°C)
Resin 15: Daisodap A manufactured by Osaka Soda (acid value 2 mgKOH/g, glass transition temperature 150°C)

### [Photopolymerization initiator]

- 379: Omnirad379 manufactured by IGM RESINS, 1,2-(dimethylamino)-2-[(4-methylphenyl)methyl]-1-[4-(4-morpholinyl)phenyl]-1-butanone
- TPO: CHEMARK TPO manufactured by Chemark Chemical, 2,4,6-trimethylbenzoyl-diphenylphosphine oxide
- DEABP: CHEMARK DEABP manufactured by Chemark Chemical, 4,4'-bis(dimethylamino)benzophenone
- 4MBP: SB-PI 712 manufactured by Shuangbang Industrial
- DETX: CHEMARK DETX manufactured by Chemark Chemical, 2,4-diethylthioxanthone
- 184: Omnirad184 manufactured by IGM RESINS, 1-hydroxy-cyclohexylphenyl ketone

### [Amine compound]

- EDB: CHEMARK EDB manufactured by Chemark Chemical, ethyl-4-(dimethylamino)benzoate

### [Pigment dispersant]

- Solsperse24000: Solsperse24000 manufactured by Lubrizol

### [Metal dryer]

- MK Dryer: MK Dryer manufactured by Toyo Ink Co., Ltd.

### [Drying inhibitor]

- Drying Inhibitor CP: Drying Inhibitor CP manufactured by Toyo Ink Co., Ltd.

### [Aluminum gelling agent]

- ALCH: ALCH manufactured by Kawaken Fine Chemicals Co., Ltd., aluminum ethyl acetate diisopropylate

### [Others]

- Soybean oil fatty acid normal butyl ester: SFB2 manufactured by Toshin Yushi Co., Ltd.

### <2>Production and evaluation of laminate

### (Examples 1 to 29, Comparative Examples 1 to 11)

Using the anchor agent prepared above, a laminate having an anchor layer on a non-absorbent substrate was produced as follows, and physical properties were evaluated. It is noted that in the following description, the non-absorbent substrate is abbreviated as substrate.

### <Printing (coating) of anchor agent on substrate>

In Examples 1 to 29 and Comparative Examples 1, 4 to 8, and 11, the anchor agents shown in Table 1 were coated on the substrate using a bar coater (No. 4, manufactured by Yasuda Seiki Co., Ltd.). Thereafter, the coating was dried in an oven at 60°C for 10 minutes to produce an anchor layer. In this manner, a laminate having an anchor layer on the substrate was obtained. In Comparative Examples 9 and 10, the anchor agents shown in Table 1 were coated on the substrate using a bar coater (No. 4, manufactured by Yasuda Seiki Co., Ltd.). Thereafter, the coating film was cured using a UV curing device (160W/cm metal halide lamp) manufactured by Eye Graphics Co., Ltd. under conditions of a conveyor speed of 30 m/min to produce an anchor layer. In this manner, a laminate having an anchor layer on the substrate was obtained.

It is noted that the substrates described in Table 1 are as follows.
- PP1: Polypropylene sheet manufactured by Okamoto Corporation
- PP2: Novatec PP manufactured by Japan Polypropylene Corporation
- PE1: Taiko FC manufactured by Futamura Chemical Co., Ltd.
- PE2: Novatec HD manufactured by Japan Polyethylene Corporation
- PET: Rishine manufactured by Toyobo Co., Ltd.
- Aluminum vapor deposition: SPECIALITIES manufactured by Gojo Paper Co., Ltd.
- Aluminum foil: Lead Max manufactured by Toyo Aluminium K.K.
- Synthetic paper: New YUPO FGS manufactured by YUPO Corporation
- PVC: PVC80C P manufactured by Lintec Corporation
- PS: Styrofan manufactured by Ohishi Sangyo Co., Ltd.
- Nylon: Emblem manufactured by Unitika Ltd.
- Cellophane: PL manufactured by Futamura Chemical Co., Ltd.
- Metal: ET2.8/2.8T2.5B manufactured by Nippon Steel Corporation

### <Evaluation of laminate having anchor layer on substrate>

The physical properties of the laminates having an anchor layer on a substrate (anchor agent coated products) obtained in Examples 1 to 29 and Comparative Examples 1, 4 to 8, and 11 were evaluated as follows.

### (Blocking resistance)

The anchor agent coated products obtained in Examples 1 to 29 and Comparative Examples 1, 4 to 8, and 11 were cut into sizes of 4 cm width and 4 cm length. The coated surface and uncoated surface of two cut coated products were brought into close contact with each other, a load of 10 N/cm² was applied, and heating was performed in an oven at 60°C for 24 hours. Thereafter, the coated products were peeled from each other and evaluation was performed. The results are shown in Table 1.

### (Evaluation criteria)

Good (G): No sound or resistance when peeled.
Poor (F): Makes a crackling sound when peeled. There is significant resistance.

It is noted that in the above evaluation, being good is practically preferable.

### (Adhesion)

Adhesive tape (Sellotape (registered trademark) 18 mm width manufactured by Nichiban Co., Ltd.) was attached to the anchor layer surface of the produced laminate. The adhesive tape attached to the anchor layer surface was peeled in a 90-degree vertical direction, and the adhesion to the substrate was evaluated from the ratio of the coating area of the anchor layer peeled from the substrate. The results are shown in Table 1.

### (Evaluation criteria)

A: No peeling of the anchor layer coating
B⁺: Peeling of the anchor layer coating is less than 10%
B: Peeling of the anchor layer coating is 10% or more and less than 30%
C⁺: Peeling of the anchor layer coating is 30% or more and less than 70%
C: 70% or more of the anchor layer coating peels off

### <Printing (application) of inks and varnishes>

In Examples 1 to 21, 24 to 27, and Comparative Examples 1, 4 to 10, on the anchor layer of the previously prepared laminate (substrate/anchor layer), using an RI tester (a simple printing machine manufactured by Akira Seisakusho Co., Ltd. (a printing machine capable of printing offset printing ink, flexographic printing ink, and resin letterpress printing ink)), the inks shown in Table 1 were printed on half the area of the substrate with an ink gauge of 0.25 mL. Thereafter, the printed matter was cured using a UV curing device (160W/cm metal halide lamp) manufactured by Eye Graphics Co., Ltd. under conditions of a conveyor speed of 30 m/min to cure the ink coating film and prepare an ink layer. In this manner, a laminate (non-absorbent substrate/anchor layer/ink layer) was obtained.

In Example 22, on the anchor layer of the previously prepared laminate (substrate/anchor layer), using an RI tester, the sample ink shown in Table 1 was printed on half the area of the substrate with an ink gauge of 0.25 mL. Thereafter, this printed matter was cured using a UV curing device (160W/cm metal halide lamp) manufactured by Eye Graphics Co., Ltd. under conditions of a conveyor speed of 100 m/min to cure the ink coating film and prepare an ink layer. In this manner, a laminate (substrate/anchor layer/ink layer) was obtained.

In Example 23, on the anchor layer of the previously prepared laminate (substrate/anchor layer), using an RI tester, the sample ink shown in Table 1 was printed on half the area of the substrate with an ink gauge of 0.25 mL, and then the printed matter was irradiated with a 30 KGy electron beam using a low-energy electron beam irradiation device manufactured by ESI Co., Ltd. (applied voltage 175 KV, nitrogen-substituted atmosphere with oxygen concentration of 50 ppm) to cure the ink and prepare an ink layer. In this manner, a laminate (substrate/anchor layer/ink layer) was obtained.

In Example 28, on the anchor layer of the previously prepared laminate (substrate/anchor layer), using an RI tester, UV varnish premixed with 2 parts of UV ink 1 was printed on half the area of the substrate with an ink gauge of 0.25 mL. Thereafter, the printed matter was cured using a UV curing device (160W/cm metal halide lamp) manufactured by Eye Graphics Co., Ltd. under conditions of a conveyor speed of 30 m/min to cure the ink coating film and prepare an ink layer. In this manner, a laminate (substrate/anchor layer/ink layer) was obtained.

In Example 29, on the anchor layer of the previously prepared laminate (substrate/anchor layer), using an RI tester, UV ink 1 was printed on half the area of the substrate with an ink gauge of 0.25 mL. Thereafter, the printed matter was cured using a UV curing device (160W/cm metal halide lamp) manufactured by Eye Graphics Co., Ltd. under conditions of a conveyor speed of 30 m/min to cure the ink coating film and prepare an ink layer. Further, using an RI tester, UV varnish was printed on the ink layer with an ink gauge of 0.25 mL, and then the printed matter was cured using a UV curing device (160W/cm metal halide lamp) manufactured by Eye Graphics Co., Ltd. under conditions of a conveyor speed of 30 m/min to cure the varnish coating film and prepare a varnish layer. In this manner, a laminate (substrate/anchor layer/ink layer/varnish layer) was obtained.

In Comparative Example 11, on the anchor layer of the previously prepared laminate (non-absorbent substrate/anchor layer), using an RI tester, the sample ink shown in Table 1 was printed on half the area of the substrate with an ink gauge of 0.25 mL. Thereafter, the ink coating film was cured by leaving it at room temperature for 24 hours to prepare an ink layer. In this manner, a laminate (non-absorbent substrate/anchor layer/ink layer) was obtained. In Comparative Examples 2 and 3, using an RI tester, the ink shown in Table 1 was directly printed on the non-absorbent substrate on half the area of the substrate with an ink gauge of 0.25 mL. Thereafter, the developed product was cured using a UV curing device (160W/cm metal halide lamp) manufactured by Eye Graphics Co., Ltd. under conditions of a conveyor speed of 30 m/min to cure the ink and prepare an ink layer. In this manner, a laminate (non-absorbent substrate/ink layer) was obtained.

### <Evaluation of laminate having ink layer on anchor layer>

The laminates obtained as described above were subjected to performance evaluation according to the following methods. The results are shown in Table 1, respectively.

### (Residual solvent)

The residual solvent of the obtained laminate was evaluated.

The laminates of Examples 1 to 29 and Comparative Examples 1 to 11 were cut into sizes of 10 cm width and 10 cm length, 100 pieces of the cut laminates were placed in an eggplant flask and sealed, then heated (temperature: 80°C, 30 minutes). Thereafter, 0.4 ml of air in the flask was extracted and analyzed by gas chromatography (GC) to confirm the amount of solvent components.

### (Evaluation criteria)

A: The total residual solvent amount was less than 0.5 mg/cm².
B⁺: The total residual solvent amount was 0.5 mg/cm² or more and less than 1 mg/cm².
B: The total residual solvent amount was 1 mg/cm² or more and less than 2 mg/cm².
C⁺: The total residual solvent amount was 2 mg/cm² or more and less than 3 mg/cm².
C: The total residual solvent amount was 3 mg/cm² or more.

It is noted that "A", "B⁺", and "B" are practically preferable.

### (Evaluation of scratch resistance)

The produced laminate was evaluated by rubbing the ink surface using cotton cloth. The less rubbing, the better the scratch resistance may be judged. The evaluation criteria are as shown below, and "A", "B⁺", and "B" are practically preferable.

### (Evaluation criteria)

A: No rubbing on the printed surface where ink was spread
B⁺: Rubbing reaches the surface layer of the printed surface where ink was spread
B: Rubbing reaches the middle portion of the printed surface where ink was spread
C⁺: Rubbing reaches the bottom portion of the printed surface where ink was spread
C: The coating film of the printed surface where ink was spread disappears

### (Evaluation of deinkability)

The laminates of prepared Examples 1 to 29 and Comparative Examples 1 to 11 were aged at 60°C for 1 week, then stored for an additional 10 days in an environment at room temperature of 23±1°C and humidity of 50±2%. Thereafter, the laminates were cut to 30×30 mm, and 90 g of each was used as a sample for testing.

### <Deinking test>

1.5L of warm water at 30°C, 11mL of 3.75% sodium hydroxide aqueous solution, and 11mL of deinking agent (DI-7027 manufactured by Kao Corporation) diluted to 1.5% were added into a 2L flask, then the sample was added, and stirring was performed at 300 rpm for 20 minutes. Two minutes after the start of stirring, the sample adhering to the lid was washed into the tank with a small amount of water. After completion of desorption, the substrate was removed, and the area covered with ink (the ratio of ink desorbed from the substrate) in the 30×30 mm sample was visually evaluated.

### (Evaluation criteria)

A: Ink is desorbed from 99% or more of the substrate
B⁺: Ink is desorbed from 95% or more and less than 99% of the substrate
B: Ink is desorbed from 90% or more and less than 95% of the substrate
C: Ink is desorbed from less than 90% of the substrate

### (Blocking resistance)

Using the prepared laminate, the laminate was cut out to a size of 4 cm in width and 4 cm in length so that the part where ink was printed (coated surface) and the part where ink was not printed (uncoated surface) in the laminate would each be half. The coated surface and uncoated surface of the cut-out laminate were brought into close contact with each other, a load of 10 N/cm² was applied to these closely contacted laminates, and they were heated in a 60°C oven for 24 hours. Thereafter, the closely contacted laminates were peeled apart from each other, and evaluation was performed.

### (Evaluation criteria)

Good (G): No sound or resistance when peeled.
Poor (F): Makes a crackling sound when peeled. There is significant resistance.

It is noted that it is practically preferable that the above evaluation results in good.

In a laminate having an anchor layer on a substrate, this is a case where both evaluations of blocking resistance and adhesion result in evaluations of "A", "B⁺", or "B",
In a laminate having an ink layer on an anchor layer, cases where all three evaluations of residual solvent, scratch resistance, and deinking property result in evaluations of "A", "B⁺", or "B" may be determined to have practicality.

From the above, according to the present invention, it was found that even in the case of a laminate configured using at least one ink selected from active energy ray curing type offset printing ink, active energy ray curing type flexographic printing ink, and active energy ray curing type resin letterpress printing ink, excellent deinking property may be obtained while having printing quality such as scratch and adhesion required in the market. Thus, according to the present invention, it is also possible to provide a producing method for a recycled substrate from a laminate and a recovering method for ink from a laminate.

### [Table 1]

**Table 1**

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Substrate | | PP1 | PP2 | PE1 | PE2 | PET | Aluminum vapor deposition | Aluminum foil | Synthetic paper | PVC | PS |
| Anchor agent | Anchor agent No. | AC1 | AC1 | AC1 | AC1 | AC1 | AC1 | AC1 | AC1 | AC1 | AC1 |
| | Anchor agent type | Aqueous | Aqueous | Aqueous | Aqueous | Aqueous | Aqueous | Aqueous | Aqueous | Aqueous | Aqueous |
| | Resin type | Aqueous acrylic | Aqueous acrylic | Aqueous acrylic | Aqueous acrylic | Aqueous acrylic | Aqueous acrylic | Aqueous acrylic | Aqueous acrylic | Aqueous acrylic | Aqueous acrylic |
| | Resin No. | Resin 1 | Resin 1 | Resin 1 | Resin 1 | Resin 1 | Resin 1 | Resin 1 | Resin 1 | Resin 1 | Resin 1 |
| | Resin acid value (mgKOH/g) | 33 | 33 | 33 | 33 | 33 | 33 | 33 | 33 | 33 | 33 |
| | Tg | 21 | 21 | 21 | 21 | 21 | 21 | 21 | 21 | 21 | 21 |
| | Blocking resistance | A | A | A | A | A | A | A | A | A | A |
| | Adhesion | A | A | A | A | A | A | A | A | A | A |
| Ink | | UV ink 1 | UV ink 1 | UV ink 1 | UV ink 1 | UV ink 1 | UV ink 1 | UV ink 1 | UV ink 1 | UV ink 1 | UV ink 1 |
| Vanish | | - | - | - | - | - | - | - | - | - | - |
| Residual solvent | | A | A | A | A | A | A | A | A | A | A |
| Scratch resistance | | B⁺ | B⁺ | B⁺ | B⁺ | B⁺ | B⁺ | B⁺ | B⁺ | B⁺ | B⁺ |
| Deinkability | | A | A | A | A | A | A | A | A | A | A |
| Blocking resistance | | A | A | A | A | A | A | A | A | A | A |

**[Table 1-1]**

| Table 1 (Continuation 1) | | | | | | | | | | | |
|---|---|---|---|---|---|---|---|---|---|---|---|
| | | Example 11 | Example 12 | Example 13 | Example 14 | Example 15 | Example 16 | Example 17 | Example 18 | Example 19 | Example 20 |
| Substrate | | Nylon | Cellophane | Metal | PP1 | PP1 | PP1 | PP1 | PP1 | PP1 | PP1 |
| Anchor agent | Anchor agent No. | AC1 | AC1 | AC1 | AC2 | AC3 | AC4 | AC5 | AC6 | AC7 | AC8 |
| | Anchor agent type | Aqueous | Aqueous | Aqueous | Aqueous | Aqueous | Aqueous | Aqueous | Aqueous | Aqueous | Aqueous |
| | Resin type | Aqueous acrylic | Aqueous acrylic | Aqueous acrylic | Aqueous acrylic | Aqueous acrylic | Aqueous acrylic | Aqueous acrylic | Aqueous acrylic | Aqueous acrylic | Aqueous urethane |
| | Resin No. | Resin 1 | Resin 1 | Resin 1 | Resin 2 | Resin 3 | Resin 4 | Resin 5 | Resin 6 | Resin 7 | Resin 8 |
| | Resin acid value (mgKOH/g) | 33 | 33 | 33 | 51 | 213 | 62 | 87 | 218 | 54 | 25 |
| | Tg | 21 | 21 | 21 | 33 | 73 | 98 | 12 | 102 | 109 | 100 |
| | Blocking resistance | A | A | A | A | A | A | B⁺ | A | A | A |
| | Adhesion | A | A | A | A | A | A | A | B⁺ | B⁺ | A |
| Ink | | UV ink 1 | UV ink 1 | UV ink 1 | UV ink 1 | UV ink 1 | UV ink 1 | UV ink 1 | UV ink 1 | UV ink 1 | UV ink 1 |
| Vanish | | - | - | - | - | - | - | - | - | - | - |
| Residual solvent | | A | A | A | A | A | A | A | A | A | A |
| Scratch resistance | | B⁺ | B⁺ | B⁺ | B⁺ | B⁺ | B⁺ | B⁺ | B⁺ | B⁺ | B⁺ |
| Deinkability | | A | A | A | A | A | A | A | A | A | A |
| Blocking resistance | | A | A | A | A | A | A | A | A | A | A |

**[Table 1-2]**

| Table 1 (Continuation 2) | | | | | | | | | | |
|---|---|---|---|---|---|---|---|---|---|---|
| | | Example 21 | Example 22 | Example 23 | Example 24 | Example 25 | Example 26 | Example 27 | Example 28 | Example 29 |
| Substrate | | PP1 | PP1 | PP1 | PP1 | PP1 | PP1 | PP1 | PP1 | PP1 |
| Anchor agent | Anchor agent No. | AC1 | AC1 | AC1 | AC1 | AC1 | AC1 | AC1 | AC1 | AC1 |
| | Anchor agent type | Aqueous | Aqueous | Aqueous | Aqueous | Aqueous | Aqueous | Aqueous | Aqueous | Aqueous |
| | Resin type | Aqueous acrylic | Aqueous acrylic | Aqueous acrylic | Aqueous acrylic | Aqueous acrylic | Aqueous acrylic | Aqueous acrylic | Aqueous acrylic | Aqueous acrylic |
| | Resin No. | Resin 1 | Resin 1 | Resin 1 | Resin 1 | Resin 1 | Resin 1 | Resin 1 | Resin 1 | Resin 1 |
| | Resin acid value (mgKOH/g) | 33 | 33 | 33 | 33 | 33 | 33 | 33 | 33 | 33 |
| | Tg | 21 | 21 | 21 | 21 | 21 | 21 | 21 | 21 | 21 |
| | Blocking resistance | A | A | A | A | A | A | A | A | A |
| | Adhesion | A | A | A | A | A | A | A | A | A |
| Ink | | UV ink 2 | LED ink | EB ink | UV flexographic ink | UV ink yellow | UV ink red | Uv ink blue | - | UV ink 1 |
| Vanish | | - | - | - | - | - | - | - | UV varnish | UV varnish |
| Residual solvent | | A | A | A | A | A | A | A | A | A |
| Scratch resistance | | B⁺ | B⁺ | B⁺ | B⁺ | B⁺ | B⁺ | B⁺ | A | A |
| Deinkability | | A | A | A | A | A | A | A | A | A |
| Blocking resistance | | A | A | A | A | A | A | A | A | A |

**[Table 1-3]**

| Table 1 (Continuation 3) | | | | | | | | | | | | |
|---|---|---|---|---|---|---|---|---|---|---|---|---|
| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 |
| Substrate | | PP1 | PP1 | PP1 | PP1 | PP1 | PP1 | PP1 | PP1 | PP1 | PP1 | PP1 |
| Anchor agent | Anchor agent No. | AC9 | - | - | AC10 | AC11 | AC12 | AC13 | AC14 | AC15 | AC16 | AC1 |
| | Anchor agent type | Aqueous | - | - | Aqueous | Aqueous | Aqueous | Aqueous | Oil-based | UV | I.JV | Aqueous |
| | Resin type | Aqueous acrylic | - | - | Aqueous acrylic | Aqueous acrylic | Aqueous acrylic | Aqueous acrylic | Oil-based urethane | - | Diallyl Phthalate | Aqueous acrylic |
| | Resin No. | Resin 9 | - | - | Resin 10 | Resin 11 | Resin 12 | Resin 13 | Resin 14 | - | Resin 15 | Resin 1 |
| | Resin acid value (mgKOH/g) | 33 | - | - | 18 | 150 | 6 | 312 | 0 | - | 2 | 33 |
| | Tg | 6 | - | - | 5 | 4 | 31 | 102 | -10 | - | 150 | 21 |
| | Blocking resistance | C | - | - | C | C | A | A | C | A | A | A |
| | Adhesion | A | - | - | A | A | A | B⁺ | A | C | C | A |
| Ink | | UV ink 1 | UV ink 1 | UV flexographic ink | UV ink 1 | UV ink 1 | UV ink 1 | UV ink 1 | UV ink 1 | UV ink 1 | UV ink 1 | Oil-based ink |
| Vanish | | - | - | - | - | - | - | - | - | - | - | - |
| Residual solvent | | A | A | A | A | A | A | A | C | A | A | A |
| Scratch resistance | | B⁺ | B⁺ | B⁺ | B⁺ | B⁺ | B⁺ | B⁺ | B | B⁺ | B⁺ | C |
| Deinkability | | A | C | C- | B | A | C | C | C | C | C | A |
| Blocking resistance | | C | - | - | C | C | A | A | C | A | A | A |

## Claims

1. A laminate comprising an anchor layer and an ink layer in this order on a non-absorbent substrate,
wherein the anchor layer contains an aqueous resin,
an acid value of the aqueous resin is 25 to 300 mgKOH/g,
a glass transition temperature of the aqueous resin is 10 to 150°C, and
the ink layer is a cured product of at least one ink selected from active energy ray curing type offset printing ink, active energy ray curing type flexographic printing ink, and active energy ray curing type resin letterpress printing ink.

2. The laminate according to claim 1, wherein the aqueous resin contains one or more selected from a group consisting of aqueous acrylic resin and aqueous urethane resin.

3. A producing method for a laminate, the producing method for a laminate comprising:
a step 1 of obtaining a laminate having an anchor layer on a non-absorbent substrate by applying an anchor agent containing water and an aqueous resin to a non-absorbent substrate, and drying in an oven to form an anchor layer, and
a step 2 of obtaining a laminate having an ink layer on an anchor layer by printing at least one ink selected from active energy ray curing type offset printing ink, active energy ray curing type flexographic printing ink, and active energy ray curing type resin letterpress printing ink on an anchor layer of a laminate having an anchor layer on the non-absorbent substrate, and curing with active energy ray to form an ink layer,
wherein an acid value of the aqueous resin is 25 to 300 mgKOH/g, and
a glass transition temperature of the aqueous resin is 10 to 150°C.

4. The producing method for a laminate according to claim 3, wherein the aqueous resin contains one or more selected from a group consisting of aqueous acrylic resin and aqueous urethane resin.

5. A deinking method for a laminate comprising an anchor layer and an ink layer in this order on a non-absorbent substrate,
wherein the anchor layer contains an aqueous resin,
an acid value of the aqueous resin is 25 to 300 mgKOH/g,
a glass transition temperature of the aqueous resin is 10 to 150°C,
the ink layer is a cured product of at least one ink selected from active energy ray curing type offset printing ink, active energy ray curing type flexographic printing ink, and active energy ray curing type resin letterpress printing ink, and
a laminate is stirred in an alkaline aqueous solution, an anchor layer is dissolved with an alkaline aqueous solution, and an ink layer is deinked from a non-absorbent substrate.

6. The deinking method for a laminate according to claim 5, wherein the aqueous resin contains one or more selected from a group consisting of aqueous acrylic resin and aqueous urethane resin.

7. A recovery method for ink, comprising filtering and recovering an ink layer deinked by the deinking method according to claim 5 or 6.
